# EUROPEAN PATENT SPECIFICATION

(11) **EP 2 409 797 B1**
(45) Date of publication and mention of the grant of the patent: **28.08.2013**
(21) Application number: 10753441.4
(22) Date of filing: 10.03.2010
(51) Int. Cl.: B22F 3/02, B22F 3/10, C08K 5/00, C08L 23/10, C08L 59/00, C08L 67/04, C08L 101/00, C08L 59/02, B22F 1/00

(54) **INJECTION MOLDING COMPOSITION**
SPRITZGUSSZUSAMMENSETZUNG
COMPOSITION DE MOULAGE PAR INJECTION

(30) Priority: 16.03.2009 JP 2009062670
(43) Date of publication of application: 25.01.2012
(73) Proprietor: IHI Corporation, Tokyo 135-8710 (JP)
(72) Inventor: KANKAWA, Yoshimitsu, Kyoto-shi Kyoto 607-8085 (JP); NAKAGAWA, Katsunori, Tokyo 135-8710 (JP)
(74) Representative: Morf, Jan Stefan
(86) International application number: PCT/JP2010/053992
(87) International publication number: WO 2010/106949

(56) References cited:
- JP-A- 7 223 211
- JP-A- 11 092 803
- JP-A- 11 343 503
- JP-A- 2008 222 535
- US-A- 6 051 184
- US-A1- 2008 227 906

## Description

### TECHNICAL FIELD

The present invention relates to an injection molding composition used in a metallic powder injection molding process.

### BACKGROUND ART

In recent years, the injection molding process has been used in order to produce a metallic product having a complicated shape. This injection molding process is a process of adding, to a metallic powder, various organic compounds and thermoplastic resins in order to give fluidity to the powder, heating/kneading the mixture, injection-molding this as a molding material, and debinding(degreasing)/sintering the resultant molded body, thereby yielding a sintered product. In injection molding compositions that have been conventionally used, in particular, injection molding compositions in which a metallic powder is used, a polyethylene, a polypropylene, a methacrylic ester copolymer, and an ethylene/vinyl acetate copolymer as polymeric compounds are used, and paraffin wax, carnauba wax or some other substance is used as a low-molecular-weight compound in many cases to prepare a binder.
However, unless the temperature for the thermal debinding (heating/degreasing) is a high temperature in the case of using these compositions, the injection molding process has a drawback that the amount of carbon remaining in the sintered body is large since the debinding ratio is low. There is also caused a problem that at the debinding time, the molded body is easily deformed since the body has a low softening temperature. This causes a long period to be required for the debinding step.

In order to solve the problems, the present inventors developed a system in which a polyoxymethylene and a polypropylene are used as an organic binder (see Patent Document 1). This binder system has an advantage that molded bodies can be treated safely in a large amount by use of a safe inert gas at the thermal debinding time. However, at a temperature between 300°C and 400°C, the binder is rapidly decomposed; thus, when a molded body having a large wall thickness is debound(degreased), this system has a problem that a satisfactory debound body is not obtained unless the period for the thermal debinding is made long (when the wall thickness of the molded body is, for example, more than 7 mm, 48 hours or more is required as the thermal debinding period).

### PRIOR ART DOCUMENT

### PATENT DOCUMENT

Patent Document 1: JP-A-H11-343503

### SUMMARY OF THE INVENTION

### PROBLEMS TO BE SOLVED BY THE INVENTION

Accordingly, an object of the present invention is to provide an injection molding composition which is high in thermal decomposability and is not easily deformed when the composition is thermally debound in order to substantially shorten periods for thermal debinding and sintering the composition in a metal powder injection molding process, and further yield a sintered body having no defects, in particular, an injection molding composition which can give a satisfactory debound body in a short period even when the debound body originates from a molded body having a large wall thickness.

### MEANS FOR SOLVING THE PROBLEMS

The present inventors have found out that the problems can be solved by performing the following in a process of injection-molding a mixture of a metallic powder and an organic binder as a raw material (injection molding composition), and debinding/sintering this injection-molded body, thereby yielding a target product: in an injection molding composition comprising a metallic powder that can be sintered and an organic binder, use is made of an organic binder containing, as essential components, a: a polylactic acid, b: a polyoxymethylene, and c: a polypropylene, and further containing d: an organic compound having a viscosity of 200 mPa·s or less at 150°C, and e: a thermoplastic resin having a Vicat softening temperature of 130°C or lower.

In other words, the injection molding composition according to the present invention comprises a metallic powder that can be sintered, and an organic binder, in which components constituting the organic binder are a: a polylactic acid, b: a polyoxymethylene, c: a polypropylene, d: an organic compound having a viscosity of 200 mPa·s or less at 150°C, and e: a thermoplastic resin having a Vicat softening temperature of 130°C or lower. By debinding/sintering a molded body yielded by injecting the molding composition, a metallic sintered body was yielded in a short period, the body being a sintered body in which deformation, swelling, cracking and other defects are absent and further the amount of remaining carbon originating from the binder is very small.

Even a molded body having a wall thickness of 7 mm or more can give a debound body which is neither swelled nor cracked in a short period by use of, in particular, an injection molding composition in which an organic binder comprising the components (a), (b), (c), (d) and (e) is contained in a proportion of 30 to 60% by volume, and further the composition ratio of this organic binder is as follows: a: 5 to 30% by volume, b: 5 to 30% by volume, c:5 to 30% by volume, d: 30 to 70% by volume, and e: 5 to 30% by volume.

### EFFECTS OF THE INVENTION

According to the injection molding composition of the invention, even a molded body having a large wall thickness can give a satisfactory debound body in a short time, so as to make it possible to produce a final product which is neither swelled nor cracked.

### EMBODIMENTS FOR CARRYING OUT THE INVENTION

The polylactic acid, which is the component (a) of the organic binder according to the invention, may be a polymer containing, as main constituent(s), L-lactic acid and/or D-lactic acid. In the invention, at 400°C or lower, the polylactic acid is thermally decomposed at speed in an inert gas atmosphere, and does not remain at the thermal decomposition. For this reason, the polylactic acid does not remain as an impurity after the molded body is sintered. Thus, a satisfactory sintered body can be yielded.

In the invention, the polyoxymethylene, which is used as the component (b) of the organic binder, is indispensable as a substance that makes the strength of the molded body high, that prevents the molded body from being deformed at 600°C or lower in the process of producing the sintered product, and that does not remain after the molded body is sintered. In order to prevent the molded body from being deformed when the body is debound, it is particularly preferred to use a polyoxymethylene having a Vicat softening temperature of 150°C or higher. In other words, a component having a characteristic that the component has a Vicat softening temperature of 150°C or higher and does not remain at the thermal decomposition is hardly found out besides the polyoxymethylene. If the addition amount of the polyoxymethylene is less than 5% by volume, the strength of the molded body lowers and further the molded body is largely deformed at 600°C or lower with ease in the sintered body production process. If the addition amount of the polyoxymethylene is more than 30% by volume, defects are easily generated in the molded body unless the temperature at the injection molding time is made high. Moreover, the molded or sintered body is easily cracked or swelled by abrupt thermal decomposition at 600°C or lower in the sintered body production process.

The polypropylene, which is used as the component (c) of the organic binder of the invention, gives toughness to the molded body to inhibit the sintered body from being cracked and inhibit any added low-melting-point compound from being separated. This resin also has a property that the resin does not remain after the sintering. A polyethylene and an ethylene/vinyl acetate copolymer also have the same property; however, these resins have a low softening temperature of 100°C or lower so that the molded body is easily deformed in the middle of the debinding thereof. In the invention, it is particularly preferred to use a polypropylene having a Vicat softening temperature of 130°C or higher in order to prevent the deformation at the debinding time. If the addition amount of the polypropylene is less than 5% by volume, a wax oozes out in a large amount at the molding time, so that defects will easily be generated in the sintered body. If the addition amount of the polypropylene is more than 30% by volume, the molded body tends to be largely deformed at 600°C or lower in the sintered body production process.

By use of an organic compound having a viscosity of 200 mPa·s or less at 150°C as the component (d), the organic compound oozes out to the surface of the molded body to make it possible to prevent the molded body from being deformed, cracked or swelled at a temperature of 600°C or lower in the sintered body production process. If an organic compound having a viscosity of higher than 200 mPa·s at 150°C is used, the wax hardly oozes out of the molded body in a temperature range of 600°C or lower in the sintered body production process, so that defects such as cracking or swelling are generated in the sintered body.

As the organic compound (the component (d)) in the invention, use may be made of one or more substances selected from fatty acid esters, fatty acid amides, phthalic acid esters, paraffin wax, microcrystalline wax, polyethylene wax, polypropylene wax, carnauba was, montan wax, urethanized wax, maleic anhydride modified wax, stearic acid, and polyglycol compounds. If the addition amount of the used organic compound is less than 30% by volume, the fluidity of the molding material deteriorates at the molding time, so that the molded body is easily broken or cracked. If the addition amount is more than 70% by volume, burrs are easily generated in the molded body at the molding time, so that the strength of the molded body may lower.

Finally, the addition of a thermoplastic resin having a Vicat softening temperature of 130°C or lower as the component (e) makes it possible to give flexibility to the molded body, and prevent defects generated at the molding time, such as welds or bubbles. In order to give flexibility to the product obtained by injection molding, it is preferred that the Vicat softening temperature of the component (e) is equal to or lower than that of the polypropylene (c). If the addition amount of the thermoplastic resin (e) is less than 5% by volume, the viscosity of the molding material becomes high so that defects such as welds or bubbles are easily generated at the molding time. If the addition amount of the thermoplastic resin (e) is more than 30% by volume, the molded body becomes soft so that the molded body tends to be largely deformed at 600°C or lower in the sintered body production process. As the thermoplastic resin (e), use may be made of a resin composed of one or more substances selected from a polyethylene, an amorphous polyolefin, an ethylene/vinyl acetate copolymer, a polyvinyl butyral resin, a glycidyl methacrylate resin, a methyl methacrylate resin, an ethyl methacrylate resin, a butyl methacrylate resin, an ethylene glycidyl methacrylate copolymer, an ethylene/acrylic acid/maleic anhydride copolymer, a maleic anhydride grafted polyolefin resin, an ethylene/vinyl acetate/maleic anhydride copolymer, and an ethylene/ethyl acrylate copolymer.

If the total proportion of the organic binder components (a), (b), (c), (d) and (e) in the invention is less than 30% by volume in the total volume of the injection molding composition (the metallic powder + the organic binder), the molded body becomes brittle easily. If the total proportion of the components (a), (b), (c), (d) and (e) is more than 60% by volume in the total volume of the injection molding composition, the molded body is easily deformed in a temperature range of 600°C or lower in the sintered body production process.

A kneading machine of a batch type or continuous type is used to knead the metallic powder and the organic binder constituted of the components (a), (b), (c), (d) and (e), as the injection molding composition of the invention; the resultant is pulverized into sizes of several millimeters; the pulverized material is used to be injection-molded to yield a molded body; the added organic binder is removed from the molded body by use of a debinding furnace; the debound molded body is sintered by use of a sintering furnace; and the resultant is optionally subjected to post-processing, so as to yield a product. In the process of producing the sintered body from the molded body, by setting the pressure at temperatures between 50°C and 600°C into the range of 0.1 to 500 torr, the added organic compound (d) oozes out to the surface of the molded body so as to vaporize. If the pressure is less than 0.1 torr, the organic compound (d) vaporizes before the compound oozes out to the molded body surface, so that the molded body is cracked or swelled. If the pressure is more than 500 torr, the organic compound (d) does not ooze easily so that the organic compound (d) is not sufficiently removed from the molded body. Thus, the molded body is cracked or swelled at the time of thermal decomposition of the polylactic acid (a), the polyoxymethylene (b), the polypropylene (c) and the thermoplastic resin (e).

The metallic powder used in the invention may be a powder made of stainless steel, an iron-based material, titanium, copper, nickel or some other. The average particle diameter of the metallic powder used in the invention is preferably from 1 to 30 µm. If the particle diameter of the powder is less than 1 µm, the binder amount necessary for the molding becomes large. Thus, at the debinding time, defects such as deformation, cracking and swelling are easily generated. If the powder average particle diameter is more than 30 µm, the powder and the binder are easily separated from each other at the molding time. Thus, the density and the strength of the resultant sintered body lower. The average particle diameter means the weight-cumulative 50% average diameter obtained by use of a particle size distribution measuring device using the laser diffraction scattering method. The particle size distribution measuring device may be a model SALD-2000 manufactured by Shimadzu Corp.

The composition of the invention is injection-molded, and the resultant molded body is put into a debinding furnace to remove the added organic binder at temperatures between 50 to 600°C. By sintering the debound molded body at 900 to 1500°C, a sintered body can be yielded in a short period, in which defects such as deformation, swelling and cracking are absent, and the amount of remaining carbon from the binder is very small. If the sintering temperature is lower than 900°C in this case, the sintered body is not sufficiently made dense. If the highest temperature is higher than 1500°C, the molded body may be unfavorably melted. Thus, attention should be paid.
In the case of using a sintering furnace having a function of treating the added organic binder thermally, a sintered body can be obtained in the same furnace without separating the debinding furnace from the sintering furnace. The molded body can be continuously debound and sintered by additionally using a debinding furnace and a sintering furnace in which the molded body is automatically carried in the furnaces, such as furnaces of a pusher type or walking beam type.

Hereinafter, the invention is further described by way of examples and comparative examples; however, the invention is not limited to the examples.

### [Example 1]

First, a polylactic acid, a polyoxymethylene and a polypropylene were charged into a pressurizing kneader, and the components were melted at 180°C. Thereto were then charged SUS 316L powder (average particle diameter: 10 µm), paraffin wax (melting point: 63°C), polypropylene wax, and glycidyl methacrylate. The mixture was then kneaded for 40 minutes, and taken out. The kneaded material was then pulverized to yield a molding composition. Next, the composition was injected at a molding temperature of 150°C to yield a molded body, 3 mm in thickness, 10 mm in width and 60 mm in length.

### Molding composition

SUS 316L powder: 100 parts by weight (58% by volume)
Total amount of the binder: 7.8 parts by weight (42% by volume)

### Binder composition

(a) polylactic acid: 15.0% by volume
(b) polyoxymethylene: 10.0% by volume
   (Vicat softening temperature: 157°C)
(c) polypropylene: 15.0% by volume
   (Vicat softening temperature: 137°C)
(d) paraffin wax: 40.0% by volume
   (viscosity at 150°C: 100 mPa·s or less)
(d) polypropylene wax: 10.0% by volume
   (viscosity at 150°C: 100 mPa·s or less)
(e) glycidyl methacrylate: 10.0% by volume
   (Vicat softening temperature: 100°C or lower)

### [Example 2]

First, a polylactic acid, a polyoxymethylene and a polypropylene were charged into a pressurizing kneader, and the components were melted at 180°C. Thereto were then charged SUS 304 powder (average particle diameter: 12 µm), paraffin wax (melting point: 46°C), carnauba wax, and polybutyl methacrylate. The mixture was then kneaded for 40 minutes, and taken out. The kneaded material was then pulverized to yield a molding composition. Next, the composition was injected at a molding temperature of 170°C to yield a molded body, 3 mm in thickness, 10 mm in width and 60 mm in length.

### Molding composition

SUS 304 powder: 100 parts by weight (60% by volume)
Total amount of the binder: 7.8 parts by weight (40% by volume)

### Binder composition

(a) polylactic acid: 15.0% by volume
(b) polyoxymethylene: 15.0% by volume
   (Vicat softening temperature: 157°C)
(c) polypropylene: 10.0% by volume
   (Vicat softening temperature: 137°C)
(d) paraffin wax: 40.0% by volume
   (viscosity at 150°C: 100 mPa·s or less)
(d) carnauba wax: 10.0% by volume
   (viscosity at 150°C: 100 mPa·s or less)
(e) polybutyl methacrylate: 10.0% by volume
   (Vicat softening temperature: 80°C or lower)

### [Example 3]

First, a polylactic acid, a polyoxymethylene and a polypropylene were charged into a pressurizing kneader at 180°C, and the components were melted. Thereto were then charged an iron-nickel 8% powder (average particle diameter: 8 µm), glycidyl methacrylate, paraffin wax (melting point: 63°C), and carnauba wax. The mixture was then kneaded for 40 minutes, and taken out. The kneaded material was then pulverized to yield a molding composition. Next, the composition was injected at a molding temperature of 160°C to yield a molded body, 3 mm in thickness, 10 mm in width and 60 mm in length.

### Molding composition

Iron-nickel 8% powder: 100 parts by weight (55% by volume)
Total amount of the binder: 7.0 parts by weight (45% by volume)

### Binder composition

(a) polylactic acid: 15.0% by volume
(b) polyoxymethylene: 15.0% by volume
   (Vicat softening temperature: 157°C)
(c) polypropylene: 15.0% by volume
   (Vicat softening temperature: 137°C)
(d) paraffin wax: 40.0% by volume
   (viscosity at 150°C: 100 mPa·s or less)
(d) carnauba wax: 5.0% by volume
   (viscosity at 150°C: 100 mPa·s or less)
(e) glycidyl methacrylate: 10.0% by volume
   (Vicat softening temperature: 100°C or lower)

### [Comparative Example 1]

In the same way as in Examples 1 to 3, a pressurizing kneader was used and an ethylene/vinyl acetate copolymer, a polystyrene, and polybutyl methacrylate, which are thermoplastic resins, were first charged into the kneader. The components were melted at 180°C. Thereto were then charged SUS 316L powder (average particle diameter: 10 µm), and paraffin wax (melting point: 46°C). The mixture was then kneaded for 40 minutes, and taken out. The kneaded material was then pulverized to yield a molding composition. Next, the composition was injected at a molding temperature of 140°C to yield a molded body, 3 mm in thickness, 10 mm in width and 60 mm in length.

### Molding composition

SUS 316L powder: 100 parts by weight (58% by volume)
Total amount of the binder: 7.8 parts by weight (42% by volume)

### Binder composition

ethylene/vinyl acetate copolymer: 20.0% by volume
(Vicat softening temperature: 57°C)
polystyrene: 15.0% by volume
(Vicat softening temperature: 120°C)
polybutyl methacrylate: 15.0% by volume
(Vicat softening temperature: 80°C or lower)
paraffin wax: 50.0% by volume
(viscosity at 150°C: 100 mPa·s or less)

### [Comparative Example 2]

First, an ethylene/vinyl acetate copolymer and a high-density polyethylene, which are thermoplastic resins, were charged into a pressurizing kneader, and the components were melted at 180°C. Thereto were then charged SUS 316L powder (average particle diameter: 10 µm), and paraffin wax (melting point: 46°C). The mixture was then kneaded for 40 minutes, and taken out. The kneaded material was then pulverized to yield a molding composition. Next, the composition was injected at a molding temperature of 140°C to yield a molded body, 3 mm in thickness, 10 mm in width and 60 mm in length.

### Molding composition

SUS 316L powder: 100 parts by weight (58% by volume)
Total amount of the binder: 7.8 parts by weight (42% by volume)

### Binder composition

ethylene/vinyl acetate copolymer: 25.0% by volume
(Vicat softening temperature: 57°C)
high-density polyethylene: 25.0% by volume
paraffin wax: 50.0% by volume
(viscosity at 150°C: 100 mPa·s or less)

The injection-molded bodies yielded in Examples 1 to 3 and Comparative Examples 1 to 2 were each set in a debinding furnace, heated at a temperature rise rate of 30°C/hr from 50°C to 260°C and a pressure of 5 torr in a nitrogen atmosphere, and heated at a temperature rise rate of 50°C/hr from 260°C to 500°C. The molded body was kept at a highest temperature of 500°C for 2 hours, and then cooled in the furnace (thermal debinding period: 13.8 hours in total). The debound molded body was gradually heated from room temperature at 50 to 400°C/hr in an accelerative mode in an argon atmosphere. The body was kept at a highest temperature of 1350°C for 2 hours so as to be sintered. In each of Examples 1 to 3, a satisfactory sintered body was yielded which was neither swelled nor cracked and had a sintered density of 95% or more. However, in each of Comparative Examples 1 and 2, the inside of the molded body was swelled and cracked at the debinding time.

### [Example 4]

Furthermore, organic binder components were variously changed to make experiments. In Table 1 are shown the composition of each of the used organic binders, and in Table 2 are shown the composition of each of the injection molding compositions, and the results. Kneading conditions, debinding conditions, and sintering conditions were in accordance with those in Examples 1 to 3. The wall thickness of each of the molded bodies was set to 3 mm.

**[Table 1] Organic binder composition (vol%)**

| | Polylactic acid | POM | PP | PW | St | EGMA | PVB | APO | PBMA | PE | EVA | PC | N12 |
|---|---|---|---|---|---|---|---|---|---|---|---|---|---|
| Components | a | b | c | d | d | e | e | e | e | d' | d' | e' | e' |
| A | 15 | 15 | 15 | 40 | 5 | 5 | 0 | 5 | 0 | 0 | 0 | 0 | 0 |
| B | 10 | 15 | 20 | 40 | 3 | 0 | 5 | 0 | 7 | 0 | 0 | 0 | 0 |
| C | 20 | 10 | 10 | 35 | 5 | 5 | 5 | 5 | 5 | 0 | 0 | 0 | 0 |
| D | 15 | 15 | 15 | 0 | 5 | 5 | 0 | 5 | 0 | 40 | 0 | 0 | 0 |
| E | 15 | 15 | 15 | 0 | 5 | 5 | 0 | 5 | 0 | 0 | 40 | 0 | 0 |
| F | 15 | 15 | 15 | 40 | 5 | 0 | 0 | 0 | 0 | 0 | 0 | 10 | 0 |
| G | 15 | 15 | 15 | 40 | 5 | 0 | 0 | 0 | 0 | 0 | 0 | 0 | 10 |

| | | | | | | | | | | | | | |
|---|---|---|---|---|---|---|---|---|---|---|---|---|---|
| (b) POM: polyoxymethylene (c) PP: polypropylene (d) PW: paraffin wax, and St: stearic acid (these were each an organic compound having a viscosity of 200 mPa·s or less at 150°C) (e) EGMA: ethylene glycidyl methacrylate, PVB: polyvinyl butyral, APO: amorphous polyolefin, and PBMA: polybutyl methacrylate (these were each a thermoplastic resin having a Vicat softening temperature of 130°C or lower) (d') PE: polyethylene, and EVA: vinyl acetate copolymer (these were each an organic compound having a viscosity of more than 200 mPa·s at 150°C) (e') PC: polycarbonate (Vicat softening temperature: 153°C), and N12: nylon 12 (Vicat softening temperature: 165°C) | | | | | | | | | | | | | |

**[Table 2]**

| | Powder | Binder | Molding composition (vol%) | | Molded body wall thickness (mm) | Sintering temperature (°C) | Internal defects in molded body | Internal defects after debinding | Internal defects after sintering | Sintered density (%) |
|---|---|---|---|---|---|---|---|---|---|---|
| | | | Powder | Binder | | | | | | |
| Sample 1 | SUS 316L | A | 58 | 42 | 3 | 1350 | Not generated | Not generated | Not generated | 96.7 |
| Sample 2 | | B | 58 | 42 | | | Not generated | Not generated | Not generated | 96.6 |
| Sample 3 | | C | 58 | 42 | | | Not generated | Not generated | Not generated | 97.1 |
| Sample 4 | | D | 58 | 42 | | | Not generated | Cracked inside | Not generated | - |
| Sample 5 | | E | 58 | 42 | | | Not generated | Cracked inside | - | - |
| Sample 6 | | F | 58 | 42 | | | Cracked inside | - | - | - |
| Sample 7 | | G | 58 | 42 | | | Bubbled inside | - | - | - |

When the component (d) was partially changed to each material (d') having a high viscosity (samples 4 and 5), the debinding was not smoothly performed so that the molded body was cracked at the debinding time. When the component (e) was changed to each material (e') having a high Vicat softening temperature (samples 6 and 7), internal defects such as cracking and bubbles were generated at the molding time. From the results of Examples 1 to 4, and other trials, it was understood that in the case of using, as the organic compound (d), an organic compound having a viscosity of 200 mPa·s or less at 150°C and using, as the thermoplastic resin (e), a thermoplastic resin having a Vicat softening temperature of 130°C or lower, the molding material can be stably molded and debound without generating any defect.

The organic compound having a viscosity of 200 mPa·s or less at 150°C may be, besides paraffin wax or stearic acid used in the present example, a fatty acid ester, a fatty acid amide, a phthalic acid ester, polyethylene wax, polypropylene wax, carnauba wax, montan wax, urethanized wax, or maleic anhydride modified wax. When these compounds were each used, good results were obtained. The viscosities were each measured by "Method for Testing Flow Characteristics of Plastic" according to JIS K 7199.

The thermoplastic resin having a Vicat softening temperature of 130°C or lower may be, besides the ethylene glycidyl methacrylate copolymer, the polyvinyl butyral resin, the amorphous polyolefin and the polybutyl methacrylate resin used in the present example, a polyethylene, an ethylene/vinyl acetate copolymer, a glycidyl methacrylate resin, a methyl methacrylate resin, an ethyl methacrylate resin, an ethylene/acrylic acid/maleic anhydride copolymer, a maleic anhydride grafted polyolefin resin, an ethylene/vinyl acetate/maleic anhydride copolymer, or an ethylene/ethyl acrylate copolymer. Also when these compounds were each used, good results were obtained. The Vicat softening temperatures were each measured in accordance with JIS K 7206.

### [Example 5]

Furthermore, organic binder components and the content of each of the organic binders in the molding composition were changed to make experiments. In Table 3 are shown the composition of each of the used organic binders, and in Table 4 are shown the composition of each of the injection molding compositions, and the results. The used metallic powders were SUS 316L and SUS 630.
Kneading conditions, debinding conditions, and sintering conditions were in accordance with those in Examples 1 to 3. The wall thickness of each of the molded bodies was changed to 3 mm, 7 mm or 10 mm to form the molded body. The molded bodies were formed in the state that the width and the length thereof were fixed to 10 mm and 60 mm, respectively. Debinding conditions were as follows:
Wall thickness of 3 mm: The concerned molded bodies were each heated at a temperature rise rate of 30°C/hr from 50°C to 260°C and a pressure of 5 torr in a nitrogen atmosphere, and heated at a temperature rise rate of 50°C/hr from 260°C to 500°C. The bodies were each kept at a highest temperature of 500°C for 2 hours, and then cooled in the furnace (thermal debinding period: 13.8 hours in total).
Wall thickness of 7 mm: The concerned molded bodies were each heated at a temperature rise rate of 25°C/hr from 50°C to 260°C and a pressure of 5 torr in a nitrogen atmosphere, and heated at a temperature rise rate of 40°C/hr from 260°C to 500°C. The bodies were each kept at a highest temperature of 500°C for 2 hours, and then cooled in the furnace (thermal debinding period: 16.4 hours in total).
Wall thickness of 10 mm: The concerned molded bodies were each heated at a temperature rise rate of 20°C/hr from 50°C to 260°C and a pressure of 5 torr in a nitrogen atmosphere, and heated at a temperature rise rate of 35°C/hr from 260°C to 500°C. The bodies were each kept at a highest temperature of 500°C for 2 hours, and then cooled in the furnace (thermal debinding period: 19.4 hours in total).

**[Table 3] Composition (vol%) of each organic binder**

| | Polylactic acid | POM | PP | PW | St | EGMA | PVB | APO | PBMA |
|---|---|---|---|---|---|---|---|---|---|
| Components | a | b | c | d | d | e | e | e | e |
| A | 15 | 15 | 15 | 40 | 5 | 5 | 0 | 5 | 0 |
| B | 10 | 15 | 20 | 40 | 3 | 0 | 5 | 0 | 7 |
| C | 20 | 10 | 10 | 35 | 5 | 5 | 5 | 5 | 5 |
| D | 0 | 25 | 25 | 35 | 5 | 5 | 0 | 5 | 0 |
| E | 25 | 0 | 25 | 35 | 5 | 5 | 0 | 5 | 0 |
| F | 25 | 25 | 0 | 35 | 5 | 5 | 0 | 5 | 0 |

**[Table 4]**

| | Powder (average particle diameter) | Binder | Molding composition (vol%) | | Molded body wall thickness (mm) | Sintering temperature (°C) | Internal defects in molded body | Internal defects after debinding | Internal defects after sintering | Sinter ed densit y (%) |
|---|---|---|---|---|---|---|---|---|---|---|
| | | | Powder | Binder | | | | | | |
| Sample 1 | SUS 316L (10 µm) | A | 58 | 42 | 3 | 1350 | Not generated | Not generated | Not generated | 96.7 |
| Sample 2 | | B | | | | | Not generated | Not generated | Not generated | 96.6 |
| Sample 3 | | C | | | | | Not generated | Not generated | Not generated | 97.1 |
| Sample 4 | | D | | | | | Not generated | Not generated | Not generated | 96.4 |
| Sample 5 | | E | | | | | Not generated | Cracked inside | - | - |
| Sample 6 | | F | | | | | Not generated | Cracked inside | - | - |
| Sample 7 | SUS 316L (12 µm) | A | 73 | 27 | | | Unable to be molded because of a high melting viscosity of material | - | - | - |
| Sample 8 | SUS 316L (12 JlIn) | | 70 | 30 | | | Not generated | Not generated | Not generated | 95.0 |
| Sample 9 | SUS 316L (12 µm) | | 65 | 35 | | | Not generated | Not generated | Not generated | 96.5 |
| Sample 10 | SUS 316L (3 µm) | | 45 | 55 | | | Not generated | Not generated | Not generated | 95.2 |
| Sample 11 | SUS 316L (3 µm) | | 40 | 60 | | | Not generated | Not generated | Not generated | 95.1 |
| Sample 12 | SUS 316L (3 µm) | | 30 | 70 | | | Not generated | Cracked inside | - | - |
| Sample 13 | SUS 630 (9 µm) | A | 60 | 40 | 7 | 1325 | Not generated | Not generated | Not generated | 96.5 |
| Sample 14 | | D | | | | | Not generated | Cracked inside | - | - |
| Sample 15 | | F | | | | | Not generated | Cracked inside | - | - |
| Sample 16 | | A | | | 10 | | Not generated | Not generated | Not generated | 96.3 |
| Sample 17 | | D | | | | | Not generated | Cracked inside | - | - |
| Sample 18 | | F | | | | | Not generated | Cracked inside | - | - |

As shown in Table 4, about the binder (D), which contained no polylactic acid resin (a), no internal defect was generated at the debinding and sintering times in the molded body 3 mm in wall thickness (sample 4). However, when the wall thickness of the molded body was changed to 7 mm or more (samples 14 and 17), internal cracking was generated at the debinding time. About the binder (E), which contained no polyoxymethylene (b), and the binder (F), which contained no polypropylene (c), cracking was generated therein at the debinding time even when the wall thickness of the molded bodies was 3 mm. It was preferred that the proportion of each of the organic binders in the concerned molding material was from 30 to 60% by volume.

### [Example 6]

Furthermore, preferred proportions of the components (a) to (e) in the organic binder were examined. In each molding composition, SUS 316L (average particle diameter: 10 µm) was used as a metallic powder, the proportions of the metallic powder and the organic binder in the molding composition were set to 58% by volume and 42% by volume, respectively, and each sintered body was produced in accordance with the way of Example 1 (however, conditions for the debinding step were appropriately varied). In Table 5 are shown the composition of each of the used organic binders, and the results. From the results of the present example, it was understood that when a molded body having a larger wall thickness is produced, the ratio by volume of each of the components (a) to (e) in the organic binder is preferably as follows: a: 5 to 30 % by volume, b: 5 to 30% by volume, c: 5 to 30% by volume, d: 30 to 70% by volume, and e: 5 to 30% by volume.

**[Table 5]**

| Composition (vol%) of organic binder | | | | | Evaluation |
|---|---|---|---|---|---|
| Polylactic acid (a) | POM (b) | PP (c) | PW (d) | PBMA (e) | |
| 3 | 25 | 22 | 40 | 10 | Cracked at debinding time in case of wall thickness of 7 mm or more |
| 5 | 25 | 20 | 40 | 10 | No problem |
| 6 | 25 | 19 | 40 | 10 | No problem |
| 15 | 25 | 10 | 40 | 10 | No problem |
| 28 | 12 | 12 | 38 | 10 | No problem |
| 30 | 12 | 10 | 38 | 10 | No problem |
| 32 | 10 | 10 | 38 | 10 | Cracked at debinding time in case of wall thickness of 7 mm or more |
| 25 | 3 | 22 | 40 | 10 | Cracked at debinding time in case of wall thickness of 7 mm or more |
| 25 | 5 | 20 | 40 | 10 | No problem |
| 25 | 6 | 19 | 40 | 10 | No problem |
| 25 | 15 | 10 | 40 | 10 | No problem |
| 12 | 28 | 12 | 38 | 10 | No problem |
| 12 | 30 | 10 | 38 | 10 | No problem |
| 10 | 32 | 10 | 38 | 10 | Cracked at debinding time in case of wall thickness of 7 mm or more |
| 22 | 25 | 3 | 40 | 10 | Cracked at debinding time in case of wall thickness of 7 mm or more |
| 20 | 25 | 5 | 40 | 10 | No problem |
| 19 | 25 | 6 | 40 | 10 | No problem |
| 10 | 25 | 15 | 40 | 10 | No problem |
| 12 | 12 | 28 | 38 | 10 | No problem |
| 10 | 12 | 30 | 38 | 10 | No problem |
| 10 | 10 | 32 | 38 | 10 | Cracked at debinding time in case of wall thickness of 7 mm or more |
| 22 | 20 | 20 | 28 | 10 | Cracked at debinding time in case of wall thickness of 3 mm or more |
| 20 | 20 | 20 | 30 | 10 | No problem |
| 19 | 20 | 18 | 33 | 10 | No problem |
| 10 | 10 | 10 | 60 | 10 | No problem |
| 8 | 8 | 8 | 68 | 8 | No problem |
| 9 | 8 | 8 | 70 | 5 | No problem |
| 5 | 6 | 6 | 75 | 8 | Cracked at debinding time in case of wall thickness of 7 mm or more |
| 15 | 16 | 16 | 50 | 3 | Cracked at debinding time in case of wall thickness of 7 mm or more |
| 16 | 16 | 15 | 45 | 8 | No problem |
| 10 | 10 | 12 | 40 | 28 | No problem |
| 10 | 10 | 10 | 40 | 30 | No problem |
| 10 | 10 | 10 | 38 | 32 | Cracked at debinding time in case of wall thickness of 7 mm or more |

### [Example 7]

The blend ratio of the polylactic acid resin was variously changed to prepare organic binders to examine preferred addition amounts of the polylactic acid (a). In each molding composition, SUS 316L (average particle diameter: 10 µm) was used as a metallic powder, the proportions of the metallic powder and the organic binder in the molding composition were set to 58% by volume and 42% by volume, respectively, and each sintered body was produced in accordance with the way of Example 1. As the binder components (b) to (e) other than the polylactic acid resin, the following was used: an organic binder described in Example 1 of JP-A-H11-343503 (Patent Document 1) [an organic binder in which a polyoxymethylene, a polypropylene, paraffin wax, polypropylene wax, and polyvinyl butyral were blended with each other to give the proportions of 10% by volume, 20% by volume, 40% by volume, 10% by volume and 20% by volume, respectively]. Molded bodies having wall thicknesses of 3 mm, 5 mm, 7 mm, 10 mm and 15 mm, respectively, were formed to examine whether or not satisfactory debound bodies were yielded. Debinding conditions were as follows:
Wall thicknesses of 3 mm and 5 mm: The concerned molded bodies were each heated at a temperature rise rate of 30°C/hr from 50°C to 260°C and a pressure of 5 torr in a nitrogen atmosphere, and heated at a temperature rise rate of 50°C/hr from 260°C to 500°C. The bodies were each kept at a highest temperature of 500°C for 2 hours, and then cooled in the furnace (thermal debinding period: 13.8 hours in total).
Wall thickness of 7 mm: The concerned molded bodies were each heated at a temperature rise rate of 25°C/hr from 50°C to 260°C and a pressure of 5 torr in a nitrogen atmosphere, and heated at a temperature rise rate of 40°C/hr from 260°C to 500°C. The bodies were each kept at a highest temperature of 500°C for 2 hours, and then cooled in the furnace (thermal debinding period: 16.4 hours in total).
Wall thickness of 10 mm: The concerned molded bodies were each heated at a temperature rise rate of 20°C/hr from 50°C to 260°C and a pressure of 5 torr in a nitrogen atmosphere, and heated at a temperature rise rate of 35°C/hr from 260°C to 500°C. The bodies were each kept at a highest temperature of 500°C for 2 hours, and then cooled in the furnace (thermal debinding period: 19.4 hours in total).
Wall thickness of 15 mm: The concerned molded bodies were each heated at a temperature rise rate of 15°C/hr from 50°C to 260°C and a pressure of 5 torr in a nitrogen atmosphere, and heated at a temperature rise rate of 30°C/hr from 260 to 500°C. The bodies were each kept at a highest temperature of 500°C for 2 hours, and then cooled in the furnace (thermal debinding period: 24.0 hours in total).

In Table 6 are shown the composition of each of the organic binders, and the results. As shown in Table 6, when the organic binder disclosed in Example 1 of Patent Document 1 (sample 1: no polylactic acid) was used, a satisfactory debound body was unable to be yielded in the case of the molded body 5 mm or more in wall thickness. However, in the case of using each of the organic binders according to the invention, even the molded bodies having a larger wall thickness were each able to give a satisfactory debound body. Particularly when the content by proportion of the polylactic acid was from 12.5 to 22.5% by volume, even the molded bodies having the wall thickness of 10 mm were each able to give a satisfactory debound body having no defect. When the content by proportion of the polylactic acid was from 15 to 20% by volume, even the molded bodies having the wall thickness of 15 mm were each able to give a satisfactory debound body having no defect.

**[Table 6]**

| | Composition (vol%) of organic binder | | Evaluation (0 to 5) ^{*2} |
|---|---|---|---|
| | Polylactic acid (a) | (b) to (e) ^{*1} | |
| Sample 1 | 0 | 100 | 1 |
| Sample 2 | 2.5 | 97.5 | 2 |
| Sample 3 | 5 | 95 | 2 |
| Sample 4 | 7.5 | 92.5 | 3 |
| Sample 5 | 10 | 90 | 3 |
| Sample 6 | 12.5 | 87.5 | 4 |
| Sample 7 | 15 | 85 | 5 |
| Sample 8 | 17.5 | 82.5 | 5 |
| Sample 9 | 20 | 80 | 5 |
| Sample 10 | 22.5 | 77.5 | 4 |
| Sample 11 | 25 | 75 | 3 |
| Sample 12 | 27.5 | 72.5 | 3 |
| Sample 13 | 30 | 70 | 2 |
| Sample 14 | 32.5 | 67.5 | 2 |
| Sample 15 | 35 | 65 | 1 |

| | | | |
|---|---|---|---|
| *1: Components and blend proportions described below (b) polyoxymethylene 10 vol% (c) polypropylene 20 vol% (d) paraffin wax 40 vol% (d) polypropylene wax 10 vol% (e) polyvinyl butyral 20 vol% *2: Evaluation criterion | | | |

0: Internal defects were generated in molded body 3 mm in wall thickness.
1: Molded body 3 mm in wall thickness was able to give satisfactory debound body, but internal defects were generated in molded body 5 mm in wall thickness.
2: Molded body 5 mm in wall thickness was able to give satisfactory debound body, but internal defects were generated in molded body 7 mm in wall thickness.
3: Molded body 7 mm in wall thickness was able to give satisfactory debound body, but internal defects were generated in molded body 10 mm in wall thickness.
4: Molded body 10 mm in wall thickness was able to give satisfactory debound body, but internal defects were generated in molded body 15 mm in wall thickness.
5: Molded body 15 mm in wall thickness was able to give satisfactory debound body.

Under the aforementioned thermal debinding conditions, also about the sample 3 and the sample 13 (the polylactic acid contents by percentage thereof were 5% and 30%, respectively), in each of which the molded body 7 mm in wall thickness was unable to be satisfactorily debound, it was verified that when the thermal debinding conditions were changed, the molded bodies 7 mm in wall thickness were able to be satisfactorily debound. Thus, in the following example, conditions for debinding molded bodies having the same wall thickness were examined.

### [Example 8]

In the same way as in Example 7, organic binders in which the blend ratio of the polylactic acid resin was varied were prepared, and then an examination was made about the temperature rise rate and the debinding period for debinding each of molded bodies 7 mm in wall thickness and 10 mm in wall thickness without generating any internal defect. Conditions other than the temperature rise rate and the debinding period were in accordance with those in Example 7. The results are shown in Table 7.

**[Table 7]**

| | Composition (vol%) of organic binder | | Wall thickness: 7 mm | | | | Wall thickness: 10 mm | | | |
|---|---|---|---|---|---|---|---|---|---|---|
| | Polylactic acid (a) | (b) to (e)^{*1} | Temperature rise rate (°C/hr) | | Keeping-period at 500°C | Thermal debinding total period | Temperature rise rate (°C/hr) | | Keeping-period at 500°C | Thermal debinding total period |
| | | | 50 to 260°C | 260 to 500°C | | | 50 to 260°C | 260 to 500°C | | |
| Sample 1 | 0 | 100 | 10 | 12 | 2 hr | 43 hr | No good product was obtained. | | | |
| | | | Average temperature rise rate: 11°C/hr | | | | | | | |
| Sample 2 | 5 | 95 | 20 | 25 | | 22.1 hr | 15 | 15 | 2 hr | 32 hr |
| | | | Average temperature rise rate: 22.4°C/hr | | | | Average temperature rise rate: 15°C/hr | | | |
| Sample 3 | 10 | 90 | 25 | 40 | | 16.4 hr | 15 | 25 | | 25.6 hr |
| | | | Average temperature rise rate: 31.25°C/hr | | | | Average temperature rise rate: 19. 1°C/hr | | | |
| Sample 4 | 15 | 85 | 30 | 45 | | 14.3 hr | 25 | 30 | | 18.4 hr |
| | | | Average temperature rise rate: 36. 5°C/hr | | | | Average temperature rise rate: 27.4°C/hr | | | |
| Sample 5 | 20 | 80 | 30 | 45 | | 14.3 hr | 25 | 30 | | 18.4 hr |
| | | | Average temperature rise rate: 36.5°C/hr | | | | Average temperature rise rate: 27.4°C/hr | | | |
| Sample 6 | 25 | 75 | 25 | 40 | | 16.4 hr | 20 | 25 | | 22.1 hr |
| | | | Average temperature rise rate: 31.25°C/hr | | | | Average temperature rise rate: 22. 4°C/hr | | | |
| Sample 7 | 30 | 70 | 20 | 25 | | 22.1 hr | 15 | 25 | | 25.6 hr |
| | | | Average temperature rise rate: 22.4°C/hr | | | | Average temperature rise rate: 19. 1°C/hr | | | |
| Sample 8 | 35 | 65 | 15 | 15 | | 32 hr | 10 | 10 | | 47 hr |
| | | | Average temperature rise rate: 15°C/hr | | | | Average temperature rise rate: 10°C/hr | | | |

| | | | | | | | | | | |
|---|---|---|---|---|---|---|---|---|---|---|
| *1: The same as in Table 6 | | | | | | | | | | |

As shown in Table 7, about the sample 1 (containing no polylactic acid), in the case of the wall thickness of 7 mm, the average temperature rise rate and the thermal debinding period were required to be set to 11°C/hr and 43 hours, respectively. Thus, a very long time was required. Even when the temperature rise rate and the debinding period were adjusted, the molded bodies more than 7 mm in wall thickness were each unable to give a satisfactory debound body. By contrast, in the case of the organic binders containing the polylactic acid, the molded bodies 7 mm in wall thickness and those 10 mm in wall thickness were each able to be debound without generating any internal defect in a shorter debinding period. When the content by percentage of the polylactic acid was from 10 to 25% by volume, even the molded bodies the wall thickness of which was larger (wall thickness: about 12 to 15 mm) were each able to give a debound body containing no internal defect by adjusting the temperature rise rate and the debinding period.

### [Comparative Example 3]

Instead of the polylactic acid, different materials were each used to prepare an organic binder, and then an experiment was made under the same conditions as in Example 7. The results are shown in Table 8. As shown in Table 8, in order to yield a satisfactory debound body, the various materials other than the polylactic acid were each tried; however, about the others than the polylactic acid, molded bodies 5 mm or more in wall thickness were each unable to give a satisfactory debound body.

**[Table 8]**

| | Composition (vol%) of organic binder | | Evaluation ( 0 to 5) ^{*2} |
|---|---|---|---|
| | 15 vol% | 85 vol% | |
| Sample 1 | PC | (b) to (e) ^{*1} | 0 |
| Sample 2 | PBT | | 0 |
| Sample 3 | PET | | 1 |
| Sample 4 | ABS | | 1 |
| Sample 5 | PPE | | 0 |
| Sample 6 | Ny12 | | 1 |

| | | | |
|---|---|---|---|
| PC: polycarbonate PBT: polybutylene terephthalate PET: polyethylene terephthalate ABS: acrylonitrile/butadiene/styrene copolymer PPE: polyphenylene ether Ny12: nylon 12 *1 and *2: The same as in Table 6 | | | |

### [Comparative Example 4]

JP-A-H07-90314 and JP-A-2004-232055 each disclose, as a binder material for metallic powder injection molding, a binder using a polylactic acid. Thus, these were also prepared for trial.

JP-A-H07-90314 does not evidently disclose a resin or a wax to be used together with a polylactic acid. According to Examples thereof, a polyethylene and paraffin wax were together used. The binder system described in this document was used to form a test piece (35 x 35 x 3 mm). As a result, when the test piece was debound at a temperature rise rate of 20°C or higher per hour, the piece was deformed and swelled.
In JP-A-2004-232055, use was made of a binder system in which a polyoxymethylene is added to a polylactic acid. In this case, a very hard molded body is yielded. However, a low-molecular-weight compound such as wax is not added; thus, the addition amount of the binder is 55% or more by volume. In the same way as described above, a test piece (35 x 35 x 3 mm) was formed and debound at a temperature rise rate of 20°C or higher per hour. As a result, the molded body was cracked.
Thus, when the temperature rise rate was made large in each of the systems, there was caused a problem that in the debinding step, the molded body was easily deformed or swelled.
In the meantime, systems in which a polyoxymethylene is used as a binder are disclosed in JP-A-H04-247802 and JP-A-H05-98306. These were formed for trial. It is stated that for the organic binders described in the documents, no residues remain after the binders are each debound by heating, and the thermal debinding can be finished in a short period because of high toughness and a high softening temperature that a polyoxymethylene has, and a matter that the polymer is a depolymerization type polymer. In these documents, the used amounts of the polyoxymethylene are each a very large value of 50% or more by volume. Thus, the viscosity of the molding material in which a metallic powder and each of these organic binders are mixed with each other is very high. It is therefore necessary to set the mold temperature to 100°C or higher. As a result, much time is required until the molded body is cooled. Moreover, at the debinding time, the debinding treatment is conducted in a gas atmosphere of a strong acid such as nitric acid or formic acid. Thus, there is a danger that a gas generated when the binder is decomposed explodes at a low concentration. Thus, when a large quantity of molded bodies are subjected to debinding treatment in the acidic gas atmosphere, problems are caused against safety and environment.

## Claims

1. An injection molding composition, comprising a metallic powder that can be sintered, and an organic binder, wherein the organic binder comprises a polylactic acid (a), a polyoxymethylene (b), a polypropylene (c), an organic compound (d) having a viscosity of 200 mPa·s or less at 150°C, and a thermoplastic resin (e) having a Vicat softening temperature of 130°C or lower.

2. The injection molding composition according to claim 1, wherein the organic binder comprising the components (a), (b), (c), (d) and (e) is contained in a proportion of 30 to 60% by volume, and the composition ratio of this organic binder is as follows: a: 5 to 30% by volume, b: 5 to 30% by volume, c: 5 to 30% by volume, d: 30 to 70% by volume, and e: 5 to 30% by volume.

3. The injection molding composition according to claim 1 or 2, wherein the organic compound of the component (d) is composed of one or more substances selected from the group consisting of fatty acid esters, fatty acid amides, phthalic acid esters, microcrystalline wax, paraffin wax, polyethylene wax, polypropylene wax, carnauba was, montan wax, urethanized wax, maleic anhydride modified wax, stearic acid, and polyglycol compounds.

4. The injection molding composition according to any one of claims 1 to 3, wherein the thermoplastic resin of the component (e) is composed of one or more substances selected from the group consisting of a polyethylene, an amorphous polyolefin, an ethylene/vinyl acetate copolymer, a polyvinyl butyral resin, a glycidyl methacrylate resin, a methyl methacrylate resin, an ethyl methacrylate resin, a butyl methacrylate resin, an ethylene glycidyl methacrylate copolymer, an ethylene/acrylic acid/maleic anhydride copolymer, a maleic anhydride grafted polyolefin resin, an ethylene/vinyl acetate/maleic anhydride copolymer, and an ethylene/ethyl acrylate copolymer.

## Patentansprüche

1. Eine Spritzgusszusammensetzung, umfassend ein metallisches Pulver, das gesintert werden kann, und ein organisches Bindemittel, wobei das organische Bindemittel eine Polymilchsäure (a), ein Polyoxymethylen (b), ein Polypropylen (c), eine organische Verbindung (d) mit einer Viskosität von 200 mPa·s oder niedriger bei 150°C und ein thermoplastisches Harz (e) mit einer Vicat-Erweichungstemperatur von 130°C oder niedriger umfasst.

2. Die Spritzgusszusammensetzung gemäß Anspruch 1, wobei das organische Bindemittel, das die Komponenten (a), (b), (c), (d) und (e) umfasst, in einem Anteil von 30 bis 60 Volumen-% enthalten ist und das Zusammensetzungsverhältnis dieses organischen Bindemittels wie folgt ist: a: 5 bis 30 Volumen-%, b: 5 bis 30 Volumen-%, c: 5 bis 30 Volumen-%, d: 30 bis 70 Volumen-% und e: 5 bis 30 Volumen-%.

3. Die Spritzgusszusammensetzung gemäß Anspruch 1 oder 2, wobei die organische Verbindung der Komponente (d) aus einer oder mehreren Substanzen besteht, ausgewählt aus der Gruppe, bestehend aus Fettsäureestern, Fettsäureamiden, Phthalsäureestern, mikrokristallinem Wachs, Paraffinwachs, Polyethylenwachs, Polypropylenwachs, Carnaubawachs, Montanwachs, urethanisiertem Wachs, mit Maleinsäureanhydrid modifiziertem Wachs, Stearinsäure und Polyglycolverbindungen.

4. Die Spritzgusszusammensetzung gemäß einem der Ansprüche 1 bis 3, wobei das thermoplastische Harz der Komponente (e) aus einer oder mehreren Substanzen besteht, ausgewählt aus der Gruppe, bestehend aus einem Polyethylen, einem amorphen Polyolefin, einem EthylenNinylacetat-Copolymer, einem Polyvinylbutyralharz, einem Glycidylmethacrylatharz, einem Methylmethacrylatharz, einem Ethylmethacrylatharz, einem Butylmethacrylatharz, einem Ethylen-Glycidylmethacrylat-Copolymer, einem Ethylen/Acrylsäure/Maleinsäureanhydrid-Copolymer, einem mit Maleinsäureanhydrid gepfropfitem Polyolefiinharz, einem Ethylen/Vinylacetat/Maleinsäureanhydrid-Copolymer und einem Ethylen/Ethylacrylat-Copolymer.

## Revendications

1. Composition de moulage par injection comprenant une poudre métallique qui peut être frittée et un liant organique, dans laquelle le liant organique comprend un acide polylactique (a), un polyoxyméthylène (b), un polypropylène (c), un composé organique (d) dont la viscosité est de 200 mPa.s ou moins à 150 °C et une résine thermoplastique (e) dont le point de ramollissement Vicat est de 130 °C ou moins.

2. Composition de moulage par injection selon la revendication 1, dans laquelle le liant organique comprenant les composants (a), (b), (c), (d) et (e) est présent dans une proportion de 30 à 60 % en volume et dans laquelle la composition de ce liant organique est comme suit . (a) : de 5 à 30 % en volume, (b) : de 5 à 30 % en volume, (c) : de 5 à 30 % en volume, (d) : de 30 à 70 % en volume et (e) : de 5 à 30 % en volume.

3. Composition de moulage par injection selon la revendication 1 ou 2, dans laquelle le composé organique du composant (d) est constitué d'une ou de plusieurs substances sélectionnées dans le groupe consistant en les suivantes : esters d'un acide gras, amides d'un acide gras, esters d'un acide phtalique, cire microcristalline, cire de paraffine, cire de polyéthylène, cire de polypropylène, cire de carnauba, cire montan, cire uréthanisée, cire modifiée par un anhydride maléique, acide stéarique et composés à base de polyglycol.

4. Composition de moulage par injection selon l'une quelconque des revendications 1 à 3, dans laquelle la résine thermoplastique du composant (e) est constituée de une ou plusieurs substances sélectionnées dans le groupe consistant en un polyéthylène, une polyoléfine amorphe, un copolymère éthylène/acétate de vinyle, une résine butyral-polyvinylique, une résine méthacrylate de glycidyle, une résine méthacrylate de méthyle, une résine méthacrylate d'éthyle, une résine méthacrylate de butyle, un copolymère éthylène/méthacrylate de glycidyle, un copolymère éthylène/acide acrylique/anhydride maléique, une réside polyoléfine greffée d'anhydride maléique, un copolymère éthylène/acétate de vinyle/anhydride maléique et un copolymère éthylène/acrylate d'éthyle.
